# EUROPEAN PATENT SPECIFICATION

(11) **EP 2 327 186 B1**
(45) Date of publication and mention of the grant of the patent: **24.02.2016**
(21) Application number: 09778505.9
(22) Date of filing: 14.09.2009
(51) Int. Cl.: H04L 12/801

(54) **METHOD FOR SUPPORTING QUALITY OF SERVICE**
VERFAHREN ZUR UNTERSTÜTZUNG VON DIENSTGÜTE
PROCÉDÉ DE SUPPORT DE QUALITÉ DE SERVICE

(30) Priority: 15.09.2008 EP 08016190
(43) Date of publication of application: 01.06.2011
(73) Proprietor: NEC Corporation, Tokyo 108-8001 (JP)
(72) Inventor: LOEW, Boris, 64757 Rothenberg (DE); KOLBE, Hans-Joerg, 64293 Darmstadt (DE); STIER, Michael, 69123 Rauenberg (DE); BRUNNER, Marcus, 69181 Leimen (DE)
(74) Representative: Patent- und Rechtsanwälte Ullrich & Naumann
(86) International application number: PCT/EP2009/006630
(87) International publication number: WO 2010/028850

(56) References cited:
- EP-A- 1 848 167
- WO-A-2007/140834
- ANDREAS FASBENDER, MARTIN GERDES, JOHAN HJELM, BO KVARNSTRÖM, JUSTUS PETERSSON, ROBERT SKOG: "Virtually at home: High-performance access to personal media" ERICSSON REVIEW, [Online] 7 May 2008 (2008-05-07), pages 58-63, XP002569032 Sweden ISSN: 0014-0171 Retrieved from the Internet: URL:http://www.ericsson.com/ericsson/corpi nfo/publications/review/2008_02/files/2_Re moteAccess.pdf> [retrieved on 2010-02-12]
- HOME GATEWAY INITIATIVE: "Remote Access" HOME GATEWAY INITIATIVE, [Online] 18 May 2008 (2008-05-18), pages 1-19, XP002569033 Retrieved from the Internet: URL:http://www.homegatewayinitiative.org/p ublis/HGI_remote_access_v1.01.pdf> [retrieved on 2010-02-12]
- "Telecommunications and Internet converged Services and Protocols for Advanced Networking (TISPAN); Resource and Admission Control Sub-System (RACS): Functional Architecture; ETSI ES 282 003" ETSI STANDARD, EUROPEAN TELECOMMUNICATIONS STANDARDS INSTITUTE (ETSI), SOPHIA ANTIPOLIS CEDEX, FRANCE, vol. TISPAN, no. V2.0.0, 1 May 2008 (2008-05-01), XP014041952

## Description

The present invention relates to a method for supporting quality of service (QoS) for data flows between an operator network and a user equipment (UE), said UE being connected to a customer premises network (CPN), wherein said data flow is transported on a communication path within said operator network and said CPN, wherein said CPN is connected to said operator network via a home gateway (HGW), said HGW being located within said CPN, wherein the internal structure of said CPN is substantially unknown to said operator network, wherein a resource and admission control subsystem (RACS) controls QoS within said operator network.

In recent years, several network technologies evolved which provide sufficient bandwidth for handling internet protocol (IP) based services originally restricted to dedicated networks. Examples for such services are video streaming and voice services. The idea of providing only one network for different kind of information and services, e. g. voice, data and all sorts of media such as video, is the basis of so called Next Generation Networks (NGN). NGN is a broad and not very well defined term for some key architectural evolutions in core, aggregation and access networks. Generally, a NGN is a packed-based network which is able to provide services, including telecommunication services, which is able to make use of multiple broadband, quality of service-enabled transport technologies and in which service-related functions are independent from underlying transport-related technologies. A NGN is generally divided in a core network and an access network. It also may comprise an aggregation network.

At providing new services over next generation networks using the Internet Protocol (IP), effective and scalable methods to perform admission control and Quality of Service (QoS) enforcement in the network is required. Especially at carrier-grade services, i.e. services at high reliability, availability and quality, high requirements, in particular regarding QoS, arise. Current designs allow resource control inside access networks, aggregation networks and core networks. An example design is described in ETSI ES 282 003 V2.0.0 "Telecommunications and Internet converged Services and Protocols for Advanced Networking (TISPAN); Resource and Admission Control Sub-System (RACS): Functional Architecture" which was released in May 2008.

Another prior art example can be found in ANDREAS FASBENDER, MARTIN GERDES, JOHAN HJELM, BO KVARNSTROM, JUSTUS PETERSSON, ROBERT SKOG: "Virtually at home: High-performance access to personal media", ERICSSON REVIEW, 7 May 2008 (2008-05-07), pages 58-63, Sweden.

Generally, these approaches offer high standard as long as the NGN transporting the data flow is completely under control of the NGN operator. Unfortunately, most user equipments (UE), i.e. user's communication devices/terminals, are not directly connected to an operator network. Very often, the UEs connect to a customer premises network (CPN) which provides access to the operator network. The CPN may comprise a LAN (Local Area Network), W-LAN (Wireless LAN) and other cable-based or wireless networks, and offers connectivity of a UE to remote servers and remote UEs using the operator network. The CPN is generally connected to the operator network via a home gateway (HGW). In such application scenarios, resource bottlenecks might be within the CPN. Even if the operator network is able to provide certain QoS for the HGW, the required QoS might not be available on the complete communication path to the UE. Thus, real end-to-end solutions are prevented.

One possible approach comprises revealing the internal structure of the CPN to the operator network. Then the QoS control unit in the operator network may also control QoS on the communication path between HGW and UE. Generally, a resource and admission control subsystem (RACS) controls Quality of Service within the operator network. The RACS may also control QoS within the CPN. However, this approach lacks in security and user privacy, as information about the infrastructure of the CPN and internal data flows has to be revealed. The information might be used by attackers.

An additional problem arise, if network addressed translation (NAT) is performed. NAT is used in CPNs very often due to the reduced number of IP addresses available for a user. Generally a user only has one or few IP addresses available, but a number of UE which need connectivity to the operator network. Commonly, workarounds for NAT traversal like NAT hole-punching or STUN (Session Traversal Utilities for NAT) is used. However, further security issues arise from this workarounds.

Other solutions are based on application layer gateways (ALGs) in the HGW. However these approaches do not solve this issue, either, since they are not able to read encrypted signalling flows. Further, current available systems as described in "Home Gateway Technical Requirements: Residential Profile, Version 1.0" published on http://www.homegatewayinitiative.org on April 29, 2008, rely on ALGs and do not take into account resources inside the CPN: These methods only take care of resources available on the access line.

Other existing remote management architectures, like the Broadband Forum's TR-69 Suite, are not designed for real-time device control. TR-69 is designed for auto-configuration, dynamic service provisioning, software/firmware image management, status and performance monitoring and diagnostics. The HGW can only be connected when significant events occur, like reboot, completion of firmware upgrade or detection of an error. However, TR-69 cannot be used in cases, where flows are to be set up or deleted and resource availability has to be checked.

It is therefore an object of the present invention to improve and further develop a method of the initially described type for supporting quality of service in such a way that QoS for end-to-end solutions spanning the operator network and the CPN is supported.

In accordance with the invention, the aforementioned object is accomplished by a method comprising the features of claim 1. According to this claim, such a method is characterized in that a home resource and admission control function (H-RACF) is provided at said HGW, said H-RACF being capable in controlling QoS within said CPN, wherein signalling messages are exchanged between said H-RACF and said RACS at setting up QoS for said data flow, and wherein said RACS controls QoS on a first part of said communication path within the operator network and said H-RACF controls QoS on a second part of said communication path within the CPN.

According to the invention it has first been recognized that end-to-end solutions spanning the operator network and the CPN are possible without revealing the internal infrastructure of the CPN to the operator network. According to the invention, a home resource and admission control function (H-RACF) is provided at the HGW. This H-RACF is capable in controlling QoS within the CPN. At controlling QoS for a data flow spanning the operator network and the CPN, the RACS control QoS within the operator network and the H-RACF controls QoS within the CPN. Both instances, the RACS and the H-RACF, control QoS on the part of the communication path for which they are responsible, respectively. In order to coordinate the QoS controlling steps, signalling messages are exchanged between the H-RACF and the RACS. In this way coordinated QoS controlling is enabled on the complete communication path for the data flow. With providing an H-RACF, the RACS (or the operator network in general) does not have to be aware of the inner infrastructure of the CPN. The RACS controls the QoS for a first part of the communication path within the operator network, while the second part of the communication path within the CPN is controlled by the H-RACF. Thus, QoS for the complete communication path of the data flow can be supported and a real-end-to-end solution spanning the operator network and the CPN is enabled.

Preferably, communication with the H-RACF regarding QoS management or other signalling messages is sent via a control channel. This control channel may be designed in an open manner to support future applications that are based on the control channel. The control channel may be implemented using certain control data packets which are transported together with "normal" data packets. The control data packets might be of a commonly used packet type. At communication on the control channel, a home resource control protocol (HRCP) may be used. HRCP defines the structure and the content of a resource request or of other signalling messages exchanged on the control channel.

According to a particular preferred embodiment, the messages transmitted on the control channel are SIP (Session Initiating Protocol) messages. Using SIP messages instead of commonly used SIP invites make the method compliant to other architectures, like 3GPP IMS (IP Multimedia System) and ETSI TISPAN, and requires less signalling steps.

The content of the SIP messages may be of different type. One possible protocol encapsulated in the SIP messages is DIAMETER according RFC 3588. However the preferred content type is XML (Extensible Mark-up Language) which is a rather generic description language and can easily be extended. Further XML can be directly transported in other signalling messages. SIP messages may be of the content type application/XML and can be used for embedding XML. Thus HRCP may be based on SIP and XML.

One preferred embodiment of the HRCP is described in connection with the figures in detail. At this embodiment, HRCP is encapsulated in XML code. The XML code is encapsulated in SIP messages which are transported using TCP (Transport Control Protocol)/UDP (Universal Datagram Protocol)/TLS (Transport Layer Security). These packets are transported using IP (Internet Protocol). Through this generic approach, HRCP and the control channel in general can be implemented in most NGN systems.

Preferably, controlling of QoS within the CPN is initiated by a resource request. This resource request is received by the H-RACF at the HGW. In reaction to this resource request, the H-RACF controls QoS within the CPN for the data flow. Advantageously, the resource request contains the information which is needed for controlling QoS. It may contain information about required bandwidth, maximum permitted jitter and maximum permitted delay. The resource request may further contain information about the address of the UE, thus allowing identification of the UE for which the QoS operation should be performed. This address might be an IP address of the network entity which send the resource request or an IP address of the UE. The address might also be a SIP URI (Session Initiation Protocol Uniform Resource Identifier). The resource request might also contain information about the QoS mechanism which should be used on the communication path.

The CPN may comprise a local application layer gateway (ALG). The ALG may be integrated into the HGW. The ALG detects data packets which are used for a session setup. ALGs are applicable in cases, where signalling for session setup is not encrypted.

According to one embodiment of the invention, the resource request is generated by this ALG. If the ALG detects a session setup, it generates the resource request in order to trigger the H-RACF to reserve or allocate resources. The resource request may also be sent via the control channel. This might be necessary in cases, where the ALG is implemented as a network entity separate from the HGW. However, the triggering message may also be sent to the H-RACF directly without using any protocol for a communication. Direct communication might be used, if the ALG is integrated in the HGW.

According to another embodiment of the present invention, the resource request is generated by the RACS. The RACS might be triggered to reserve or allocate resources for a new data flow. The RACS then controls QoS of the operator network. Simultaneously or sequentially, the RACS determines the location of the corresponding HGW and sends a resource request to the H-RACF in the HGW.

The RACS might be triggered by an application function (AF) which is provided at the operator network. The AF and the UE may exchange signalling for a session setup, for instance if a telephone call should be initiated. The application function then triggers the RACS to control QoS on the communication path used by the data flow between the AF and the UE. Controlling QoS here comprises allocation of resources or reservation of resources.

In another embodiment of the invention, the resource request might be generated by another network node. This network node might be located within the CPN or within the operator network. One possible network node within the CPN which generates a resource request may be a Femto-Cell Access Point (FCAP). The UE may connect to the FCAP and may trigger a session setup for a telephone call, video stream or the like. The FCAP then connects the H-RACF and sends a resource request to the H-RACF. In reaction to the resource request, the H-RACF controls QoS within said CPN which in this case may comprise allocation or reservation of resources. The H-RACF will send signalling messages to the RACS in order to trigger the RACS to perform resource allocation or reservation within the operator network.

Controlling QoS within the CPN may generally comprise checking availability of resources. This may be a first step, when a network node wants to know, if a data flow with certain QoS constraints may be setup. This may be applicable, if an application running at an UE wants to establish a video stream with a certain resolution. If the required QoS for this video stream cannot be provided, another video stream with lower resolution might be selected. Another step at controlling QoS with the CPN may comprise allocation of resources. This may be a second step after a resource availability check. Another step which might be performed at controlling QoS comprises releasing allocated or reserved resources. When a session is terminated and the communication path is no longer needed for the data flow, the resources used by the data flow should be released.

When controlling QoS, the H-RACF may send QoS signalling messages to the network entities which are involved in communication on the communication path. Alternatively, the H-RACF may contact a QoS controlling entity which generates and sends the necessary QoS signalling to the network entities involved in communication on the communication path. In this case, the H-RACF only sends information to the QoS controlling entity which indicate the QoS constraints needed.

At controlling QoS within the CPN, the H-RACF needs to have information about the resources which are available within the CPN. The information may also refer to availability of resources of the access line which links the HGW to the operator network. This information might be necessary, if the H-RACF also controls QoS at this access line. However, QoS on the access line may also be controlled by the RACS.

In order to get information about resource availability in the CPN and/or on the access line, the H-RACF may track resources within the CPN. As QoS within the CPN is controlled by the H-RACF, the H-RACF generally has information about running connections between the UEs within the CPN and the operator network. However, the H-RACF may also query information about resource availability from a third network entity. This network entity may be a server within the CPN which stores information about running connections and their respective constraints. The third network entity may also be a router within the CPN which tracks the network load of its ports. Further network entities which may store information about resource availability may be queried.

After receiving a resource request, the H-RACF calculates available resources inside the CPN for the communication path to the UE. Additionally it may calculate available resources on the access line. The H-RACF then allocates or reserves resources and establishes a policy for the new data flow. This policy may be pushed to a home resource control and enforcement function (H-RCEF). The H-RCEF stores and enforces each QoS policy which is established by the H-RACF. If a resource request triggers releasing of resources, the H-RACF may also connect the R-RCEF in order the delete the according QoS policy.

Preferably, the H-RACF sends a reply to network entity from which the resource request was received. This reply may be generated after completion of the QoS operation which may comprise resource availability checks, resource allocation or reservation and releasing of resources. The reply may trigger the querying entity to perform further steps. For instance if a RACS sends the resource request on behalf of an AF, the reply from the H-RACF may trigger the RACS to send a reply to the AF that resources are reserved for the requested data flow. AF can then start transmitting data on the communication path to the UE.

Advantageously, the method might be used at an emergency warning system. One example implementation of such an emergency warning system is described in the following. The emergency warning system comprises an emergency warning server which keeps track of emergency warnings which should be transmitted in a certain area. If this emergency warning server discovers that in a certain area an emergency warning is to be send to all connected households, it triggers an application server. The application server then looks up all SIP URIs of the HGWs in that area by performing a lookup in the appropriate network attachment subsystem (NASS) data base. With the information retrieved from the NASS data base, the application server uses the control channel in order to connect the H-RACF of each HGW in that area. The application server sends HRCP messages to each HGW requesting to set up a multimedia session with a priority for an emergency service. Once the HGW has received the message, it performs a lookup of local devices attached that can render the media content. It then forces the devices to set up a media session with the application server using the highest priority. For this it may receive a token that has been generated by the application server. The whole session setup may use existing procedures for the RACS including the extension for the H-RACF. Other media sessions might be terminated if necessary.

The control channel may be used to perform network address translation (NAT) traversal control by requesting NAT bindings. The control channel can even be used in symmetric NAT case, relieving the operator from deploying commonly used workarounds for NAT traversal like NAT hole-punching or STUN.

Further the control channel may be used for other real-time control procedures. These procedures may go beyond QoS or NAT control.

It should be understood, that the terms used within this document, like RACS, ALG, or HGW does not restrict the present invention to the usage of TISPAN, although these terms are commonly used in that context. Also other technologies providing similar functionality may be used in connection with the present invention. Also the terms for the single entities do not restrict the entities to a specific implementation. E.g. an HGW may be implemented with similar gateways. It even may comprise a Femto-Cell Access Point with integrated gateway functionality.

There are several ways how to design and further develop the teaching of the present invention in an advantageous way. To this end it is to be referred to the patent claims subordinate to patent claim 1 on the one hand and to the following explanation of preferred embodiments of the invention by way of example, illustrated by the figure on the other hand. In connection with the explanation of the preferred embodiments of the invention by the aid of the figure, generally preferred embodiments and further developments of the teaching will we explained. In the drawing
- Fig. 1: is a block diagram of an example scenario at which a method concerning the invention may be used,
- Fig. 2: is a schematic drawing showing the encapsulation of the HRCP in IP, and
- Fig. 3: is a sequence diagram of steps of a method concerning the invention.

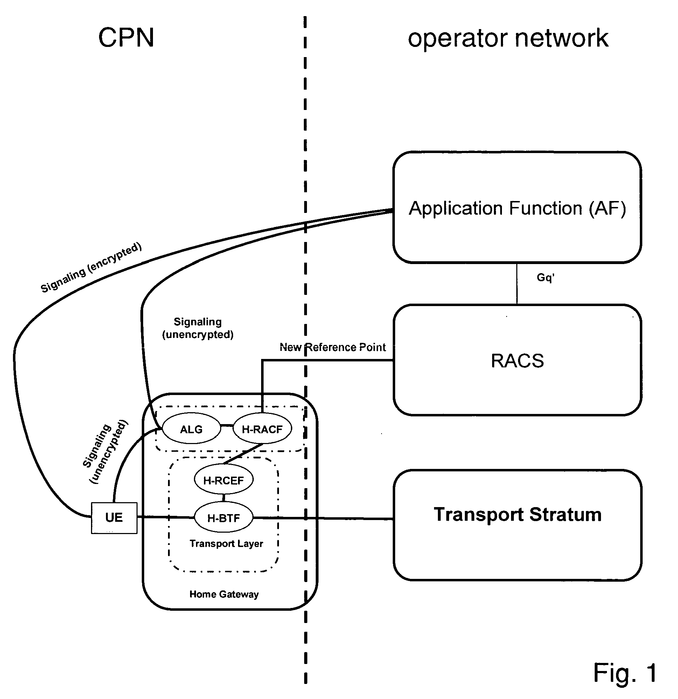

Fig. 1 shows a NGN which is divided in two network sections: The operator network and the customer premises network (CPN). The operator network is under control of an operator. This network might be a digital subscriber line (DSL) or the like. The CPN is under control of the customer of the operator which uses the operator as a wide area network. The customer may be a private person or a company. The CPN is only a "black box" to the operator network; i.e. the internal structure of the CPN is unknown to the operator network. The operator network and the CPN is connected to each other by a HGW. The HGW provides the gateway from the CPN to the operator network, i.e. each data flow spanning the CPN and the operator network is routed through the HGW.

A RACS controls QoS within the operator network. An application function (AF) is provided in the operator network which offers services to a UE within the CPN. The UE may be a computer, a mobile phone, a notebook, a TV set, stereo equipment, or the like. The access link of the UE to the CPN may be cable-based (e.g. Ethernet) or wireless (e.g. W-LAN, WiMAX (World Wide Interoperability for Microwave Access) or UMTS (Universal Mobile Telecommunication System)). The operator network comprises a transports stratum which provides a physical link to an H-BTF (Home Basic Transport Function) at the HGW. Beside the H-BTF, the HWG includes an H-RCEF which is linked to the H-BTF. The H-RCEF stores and enforces QoS policies which are pushed to the H-RCEF by an H-RACF. The H-RACF is linked to the H-RCEF and has a further interface to a local ALG which keeps track of internal unencrypted signalling messages. Fig. 1 shows an example for unencrypted signalling flow between the UE and the AF. This signalling is tracked by the ALG. A further encrypted signalling flow is shown in Fig. 1. Due to the encryption, the ALG is transparent for the signal flow and the ALG is not able to detect the according QoS requirements. The signalling messages are directly exchanged between the UE and the AF.

The AF connects to the RACS at reference point Gq'. The H-RACF connects to the RACS at a new reference point.

Two different cases are shown in Fig. 1 for data flows that need to be set up between the CPN and the operator network:
A) Flows that are set up by signaling that is exchanged between UE and a network-based AF and
B) Flows that are initiated from inside the CPN.

In case A) the AF determines during a session setup between UE and itself that resource reservation is required for a media channel. It then triggers the RACS to reserve resources. This procedure is described in the abovementioned ETSI ES 282 003. The RACS in reaction to the trigger of AF determines the location of the corresponding HGW and sends a resource request for reservation of resources to the H-RACF in the HGW. Having received the resource request, the H-RACF calculates available resources on the access line and inside the CPN for the communication path to the UE. The H-RACF reserves resources and pushes a policy to the H-RCEF. It then replies to the RACS with an "accept" message. Alternatively the steps of replying and policy pushing policy may be changed, i.e. the H-RACF first reserves the resources, replies with an "accept" message to the RACS, and waits for a confirmation message from the RACS before pushing the policy to the H-RCEF. After receiving the policy from the H-RACF, the H-RCEF pushes the policy to the attached nodes inside the CPN. An example use case is the setup of a voice call using encrypted SIP signaling, for instance when using IMS-AKA (IP Multimedia System Authentication and Key Agreement).

In case B), the internal ALG of the HGW detects a session setup and requests the H-RACF to reserve resources. The request is sent as a resource request. The ALG is implemented internally in the HGW. A protocol specification between ALG and H-RACF is therefore not needed. An example use case is a user-configured prioritization of gaming traffic that is not provided by an application in the operator network.

Another possibility for using the ALG is that the ALG interconnects with an SPDF (Service-based Policy Decision Function) included in the RACS. In this way, the ALG may trigger the RACS to control QoS on the communication path. The control flow would then be similar to the control flow of case A) beside that triggering of RACS is not performed by the AF but by the internal ALG of the CPN. The ALG may also interconnect with the AF in order to request resources inside the operator network for sessions that do not base on services by the AF. The ALG then triggers the AF to perform the steps of case A). Preferably such interconnection of the ALG goes through the H-RACF, enabling the H-RACF to be aware of all resource requests, the ones triggered by the ALG and the ones triggered by the RACS.

It should be pointed out, that case A) and case B) can be implemented separate from each other or combined. If only case A) is to be covered, the ALG may be omitted in the system of Fig. 1.

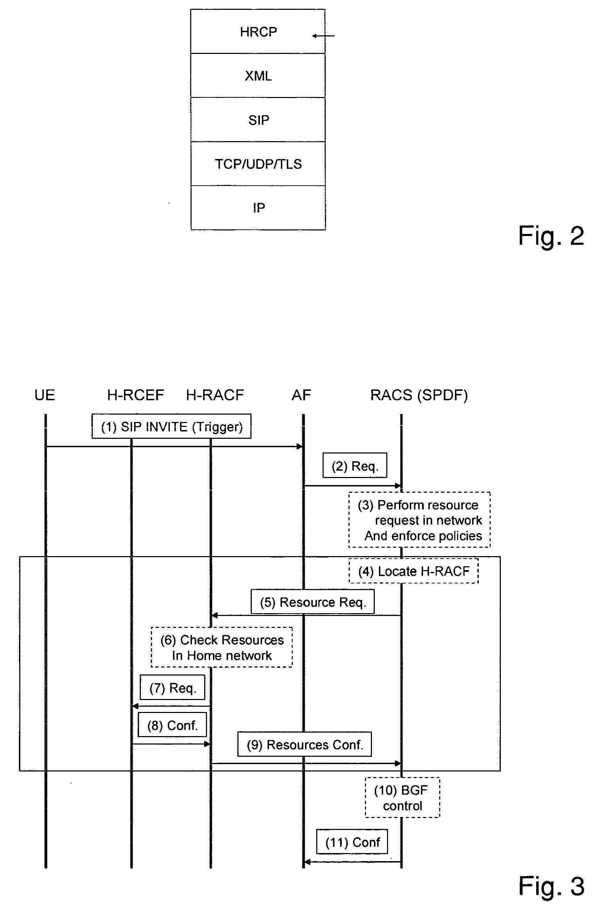

Fig. 2 shows a diagram illustrating encapsulation of the different protocols used for the home resource control protocol (HRCP) which may be used at one of the preferred embodiment of the invention. HRCP is encapsulated in XML code. The XML code is transported using SIP messages which are transported by TCP/UDP/TLS and IP. The HRCP is used to form a control channel. Signaling messages or resource requests may be sent on this control channel using HRCP. An example for a resource request command embedded in a XML based HRCP protocol is given as follows:

```
<?xml version="1.0" encoding="ISO-8859-1" standalone="yes"?>
 <hgw_rac_protocol>
      <header>
             <version>0.0</version>
             <command>RR</command>
             <type>0</type>
             <ipV>IP4</ipV>
             <resId>p-cscf-a.nw.neclab.eu;1333D;123</resId>
             <authorizationLifetime>450</authorizationLifetime>
             <authGracePeriod>0</authGracePeriod>
             <numObjects>1</numObjects>
      </header>
      <body>
             <mediaObjects>
                    <priority>0</priority>
                    <rsBW>80000</rsBW>
                    <rrBW>80000</rrBW>
                    <numberFlows>1</numberFlows>
                          <flowInformationU>
                                 <flowNumber>1</flowNumber>
                                 <flowStatus>2</flowStatus>
                                 <mediaType>1</mediaType>
                                 <serviceClass>1</serviceClass>
                                 <direction>recv</direction>
                                 <protocolNumber>17</protocolNumber>
                                 <ipLocal>192.168.0.2</ipLocal>
                                 <portLocal>23942</portLocal>
                                 <ipEndpoint>80.80.80.80</ipEndpoint>
                                 <portEndpoint>50000</portEndpoint>
                                 <ipGlobal>60.234.45.8</ipGlobal>
                                 <portGlobal>32168</portGlobal>
                                 <profileId>1</profileId>
                                 <numberParameter>1</numberParameter>
                                 <parameter>2000000</parameter>
                          </flowInformationU>
             </mediaObjects>
      </body>
      </hgw_rac_protocol>
```

Fig. 3 shows a sequence diagram of steps of a method concerning the invention. The sequence diagram refers to the example scenario of Fig. 1. Fig. 3 shows the steps of a resource reservation for the setup of a multimedia session using SIP. For other signaling protocols supported by the AF, it is also applicable. It reflects the case where RACS is using the reservation procedure without explicit commit messages. The invention may also be used in combination with a 2-stage method (separate reserve and commit flows).

The following steps are executed and shown in Fig. 3:
(1) The UE sends a request to the AF to set up a multimedia session (in this case a SIP INVITE message).
(2) The AF sends a resource request to the RACS (i.e. the SPDF). The AF adds the local IP address and port of the UE to the request.
(3) The RACS performs resource reservation procedures as described in ETSI ES 282 003.
(4) The SPDF locates the HGW behind which the UE resides. To do so, it correlates the IP address learned from the AF with the SIP URI. The SIP URI is retrieved from the Network Attachment Subsystem (NASS) and the current SIP registration database
(5) The SPDF then sends a resource request to the HGW using HRCP. For this, the SPDF needs to implement a SIP UE and needs to have registered in the IMS with his unique SIP URI. A different option is to implement the SIP UE in an instance of an A-RACF (Access Resource and Admission Control Function) within the operator network.
(6) The HGW performs a local check of resources on the access line and inside the CPN on the communication path to the UE that requested the service. The HGW may contact other network elements in the home network using another protocol for resource reservation.
(7) The H-RACF requests the H-RCEF to enforce the policy.
(8) The H-RCEF replies with a confirmation message to the H-RACF.
(9) The H-RACF replies to the RACS with a confirmation message.
(10) The SPDF controls the BGF (Border Gateway Function).
(11) The SPDF replies to the AF with a confirmation message.

Step (5) may include the SPDF sending a request to a cascaded A-RACF instance including the local IP address and port and the SIP URI of the HGW. In this case, the A-RACF contains the SIP client that exchanges messages with the HGW.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. Method for supporting quality of service, QoS, for data flows between an operator network and a user equipment, UE, said UE being connected to a customer premises network, CPN,
wherein said data flow is transported on a communication path within said operator network and said CPN,
wherein said CPN is connected to said operator network via a home gateway, HGW, said HGW being located within said CPN,
wherein a resource and admission control subsystem, RACS, controls QoS within said operator network,
wherein a home resource and admission control function, H-RACF, is provided at said HGW, said H-RACF being capable in controlling QoS within said CPN,
**characterized** i n that the internal structure of said CPN is substantially unknown to said operator network,
wherein signalling messages are exchanged between said H-RACF and said RACS at setting up QoS for said data flow, thus coordinating QoS controlling steps for said data flow within the operator network and the CPN, and
wherein said RACS controls QoS on a first part of said communication path within the operator network and said H-RACF controls QoS on a second part of said communication path within the CPN.

2. Method according to claim 1, wherein signalling messages are sent to said H-RACF on a control channel, wherein communication on said control channel is preferably performed using a home resource control protocol, HRCP.

3. Method according to claim 2, wherein signalling on said control channel is based on SIP, session Initiation Protocol, messages.

4. Method according to claim 2 or 3, wherein said HRCP is based on XML, Extensible Markup Language.

5. Method according to any of claims 1 to 4, wherein said H-RACF receives a resource request and wherein - in reaction to said resource request - said H-RACF controls QoS within said CPN for said data flow, said resource request preferably being sent on said control channel.

6. Method according to any of claims 1 to 5, wherein an application layer gateway, ALG, is provided at said HGW, said ALG tracking presence of session setup signalling, wherein said ALG preferably generates a resource request, when said session setup signalling is detected.

7. Method according to any of claims 1 to 6, wherein said RACS generates a resource request.

8. Method according to any of claims 1 to 7, wherein an application function, AF, is provided at said operator network, said AF triggering said RACS to perform QoS operation.

9. Method according to any of claims 1 to 8, wherein another network node generates a resource request, said network node being located in said operator network or in said CPN.

10. Method according to any of claims 1 to 9, wherein - at controlling QoS - said H-RACF checks resource availability and/or performs allocation or reservation of resources and/or releases allocated/reserved resources.

11. Method according to any of claims 1 to 10, wherein said H-RACF tracks resources within said CPN or queries resource availability from a third network entity within said CPN.

12. Method according to any of claims 1 to 11, wherein said H-RACF pushes a QoS policy to a home resource control and enforcement function, H-RCEF, said H-RCEF storing and enforcing QoS policies for said CPN.

13. Method according to any of claims 5 to 12, wherein said H-RACF sends a reply to the network entity from which said resource request is received, said reply being sent after completion of QoS operation requested by said resource request.

14. Method according to any of claims 2 to 13, wherein said control channel is used at an emergency warning system at sending an emergency warning to one or several UEs within said CPN.

15. Method according to any of claims 2 to 14, wherein said control channel is used to perform NAT, network address translation, traversal control by requesting NAT bindings, and/or
wherein said control channel is used for real-time control-procedures.

## Patentansprüche

1. Verfahren zum Unterstützen von Dienstgüte, QoS, für Datenflüsse zwischen einem Betreibernetzwerk und einem Nutzergerät, UE, wobei das UE mit einem Teilnehmernetzwerk, CPN, verbunden ist,
wobei der Datenfluss auf einem Kommunikationspfad innerhalb des Betreibernetzwerks und des CPNs transportiert wird,
wobei das CPN mit dem Betreibernetzwerk über ein Heim-Gateway, HGW, verbunden ist, wobei das HGW innerhalb des CPNs angeordnet ist,
wobei ein Ressourcen- und Zugangssteuerungssubsystem, RACS, QoS innerhalb des Betreibernetzwerks steuert,
wobei eine Heim-Ressourcen- und Zugangssteuerungsfunktion, H-RACF, bei dem HGW zur Verfügung gestellt ist, wobei die H-RACF zum Steuern der QoS innerhalb des CPNs ausgebildet ist,
**dadurch gekennzeichnet, dass** die interne Struktur des CPNs dem Betreibernetzwerk im Wesentlichen unbekannt ist,
wobei bei Einrichten des QoS für den Datenfluss Signalisierungsnachrichten zwischen der H-RACF und dem RACS ausgetauscht werden, wodurch die QoS-Steuerschritte für den Datenfluss innerhalb des Betreibernetzwerks und des CPNs koordiniert werden, und
wobei das RACS die QoS auf einem ersten Teil des Kommunikationspfades innerhalb des Betreibernetzwerks und die H-RACF die QoS auf einem zweiten Teil des Kommunikationspfades innerhalb des CPNs steuert.

2. Verfahren nach Anspruch 1, wobei Signalisierungsnachrichten zu dem H-RACF auf einem Steuerkanal gesendet werden, wobei eine Kommunikation auf dem Steuerkanal vorzugsweise unter Verwendung eines Heim-Ressourcen-Steuerprotokolls, HRCP, durchgeführt wird.

3. Verfahren nach Anspruch 2, wobei Signalisieren auf dem Steuerkanal auf SIP-Nachrichten, Session Initiation Protocol Messages, basiert.

4. Verfahren nach Anspruch 2 oder 3, wobei das HRCP auf XML, Extensible Markup Language, basiert.

5. Verfahren nach einem der Ansprüche 1 bis 4, wobei die H-RACF eine Ressourcen-Anfrage empfängt und wobei - in Reaktion auf die Ressourcen-Anfrage-die H-RACF QoS innerhalb des CPNs für den Datenfluss steuert, wobei die Ressourcen-Anfrage vorzugsweise auf dem Steuerkanal gesendet wird.

6. Verfahren nach einem der Ansprüche 1 bis 5, wobei bei dem HGW ein Anwendungsschicht-Gateway, ALG, vorgesehen ist, wobei das ALG das Vorhandensein von Sitzungseinrichtungssignalisierung verfolgt, wobei das ALG vorzugsweise eine Ressourcen-Anfrage erzeugt, wenn die Sitzungseinrichtungssignalisierung erkannt wird.

7. Verfahren nach einem der Ansprüche 1 bis 6, wobei das RACS eine Ressourcen-Anfrage erzeugt.

8. Verfahren nach einem der Ansprüche 1 bis 7, wobei eine Anwendungsfunktion, AF, bei dem Betreibernetzwerk zur Verfügung gestellt ist, wobei die AF das RACS zum Durchführen einer QoS-Operation anstößt.

9. Verfahren nach einem der Ansprüche 1 bis 8, wobei ein weiterer Netzwerkknoten eine Ressourcen-Anfrage erzeugt, wobei der weitere Netzwerknoten in dem Betreibernetzwerk oder in dem CPN angeordnet ist.

10. Verfahren nach einem der Ansprüche 1 bis 9, wobei - beim Steuern von QoS - die H-RACF die Ressourcen-Verfügbarkeit überprüft und/oder Allokierung oder Reservierung von Ressourcen durchführt und/oder allokierte/reservierte Ressourcen freigibt.

11. Verfahren nach einem der Ansprüche 1 bis 10, wobei die H-RACF Ressourcen innerhalb des CPNs verfolgt oder Ressourcen-Verfügbarkeit von einer dritten Netzwerkeinheit innerhalb des CPNs abfragt.

12. Verfahren nach einem der Ansprüche 1 bis 11, wobei das H-RACF eine QoS-Richtlinie an eine Heim-Ressourcen-Steuerungs- und Durchsetzungsfunktion, H-RCEF, pusht, wobei die H-RCEF die QoS-Richtlinien für das CPN speichert und durchsetzt.

13. Verfahren nach einem der Ansprüche 5 bis 12, wobei das H-RACF eine Antwort an die Netzwerkeinheit sendet, von der die Ressourcen-Anfrage empfangen worden ist, wobei die Antwort nach Vervollständigung der durch die Ressourcen-Anfrage angefragte QoS-Operation gesendet wird.

14. Verfahren nach einem der Ansprüche 2 bis 13, wobei bei einem Notfallwarnsystem der Steuerkanal beim Senden von Notfallwarnungen zu einem oder mehreren UEs innerhalb des CPNs genutzt wird.

15. Verfahren nach einem der Ansprüche 2 bis 14, wobei der Steuerkanal zum Durchführen von NAT-Traversierungssteuerung, Network Address Translation Traversal Control, durch Anfragen von NAT-Bindings genutzt wird und/oder
wobei der Steuerkanal für Echtzeit-Steuerprozeduren genutzt wird.

## Revendications

1. Procédé de prise en charge de qualité de service, QoS, pour des flux de données entre un réseau d'opérateur et un équipement d'utilisateur, UE, ledit équipement UE étant connecté à un réseau de locaux d'abonné, CPN ;
dans lequel ledit flux de données est transporté sur un chemin de communication au sein dudit réseau d'opérateur et dudit réseau CPN ;
dans lequel ledit réseau CPN est connecté audit réseau d'opérateur par l'intermédiaire d'une passerelle domestique, HGW, ladite passerelle HGW étant située au sein dudit réseau CPN ;
dans lequel un sous-système de commande d'admission et de ressources, RACS, commande la qualité QoS au sein dudit réseau d'opérateur ;
dans lequel une fonction de commande d'admission et de ressources domestique, H-RACF, est fournie au niveau de ladite passerelle HGW, ladite fonction H-RACF étant en mesure de commander la qualité QoS au sein dudit réseau CPN ;
**caractérisé en ce que** la structure interne dudit réseau CPN est sensiblement inconnue dudit réseau d'opérateur ;
dans lequel des messages de signalisation sont échangés entre ladite fonction H-RACF et ledit sous-système RACS au cours de l'établissement de la qualité QoS pour ledit flux de données, coordonnant ainsi les étapes de commande de qualité QoS pour ledit flux de données au sein du réseau d'opérateur et du réseau CPN ; et
dans lequel ledit sous-système RACS commande la qualité QoS sur une première partie dudit chemin de communication au sein du réseau d'opérateur, et ladite fonction H-RACF commande la qualité QoS sur une seconde partie dudit chemin de communication au sein du réseau CPN.

2. Procédé selon la revendication 1, dans lequel des messages de signalisation sont envoyés à ladite fonction H-RACF sur un canal de commande, dans lequel la communication sur ledit canal de commande est de préférence mise en oeuvre en utilisant un protocole de commande de ressources domestique, HRCP.

3. Procédé selon la revendication 2, dans lequel la signalisation sur ledit canal de commande est basée sur des messages de protocole d'ouverture de session, SIP.

4. Procédé selon la revendication 2 ou 3, dans lequel ledit protocole HRCP est basé sur le langage de balisage extensible, XML.

5. Procédé selon l'une quelconque des revendications 1 à 4, dans lequel ladite fonction H-RACF reçoit une demande de ressources et dans lequel, en réaction à ladite demande de ressources, ladite fonction H-RACF commande la qualité QoS au sein dudit réseau CPN pour ledit flux de données, ladite demande de ressources étant de préférence envoyée sur ledit canal de commande.

6. Procédé selon l'une quelconque des revendications 1 à 5, dans lequel une passerelle de couche application, ALG, est fournie au niveau de ladite passerelle HGW, ladite passerelle ALG suivant la présence d'une signalisation d'établissement de session, dans lequel ladite passerelle ALG génère de préférence une demande de ressources, lorsque ladite signalisation d'établissement de session est détectée.

7. Procédé selon l'une quelconque des revendications 1 à 6, dans lequel ledit sous-système RACS génère une demande de ressources.

8. Procédé selon l'une quelconque des revendications 1 à 7, dans lequel une fonction d'application, AF, est fournie au niveau dudit réseau d'opérateur, ladite fonction AF déclenchant ledit sous-système RACS en vue de mettre en oeuvre une opération de qualité QoS.

9. Procédé selon l'une quelconque des revendications 1 à 8, dans lequel un autre noeud de réseau génère une demande de ressources, ledit noeud de réseau étant situé dans ledit réseau d'opérateur ou dans ledit réseau CPN.

10. Procédé selon l'une quelconque des revendications 1 à 9, dans lequel, au cours de la commande de qualité QoS, ladite fonction H-RACF contrôle la disponibilité de ressources et/ou met en oeuvre une affectation ou une réservation de ressources et/ou libère des ressources affectées/réservées.

11. Procédé selon l'une quelconque des revendications 1 à 10, dans lequel ladite fonction H-RACF suit des ressources au sein dudit réseau CPN, ou interroge une troisième entité de réseau en ce qui concerne une disponibilité de ressources au sein dudit réseau CPN.

12. Procédé selon l'une quelconque des revendications 1 à 11, dans lequel ladite fonction H-RACF pousse une politique de qualité QoS vers une fonction de mise en application et de commande de ressources domestiques, H-RCEF, ladite fonction H-RCEF stockant et mettant en application des politiques de qualité QoS pour ledit réseau CPN.

13. Procédé selon l'une quelconque des revendications 5 à 12, dans lequel ladite fonction H-RACF envoie une réponse à l'entité de réseau à partir de laquelle ladite demande de ressources est reçue, ladite réponse étant envoyée suite à l'achèvement d'une opération de qualité QoS demandée par ladite demande de ressources.

14. Procédé selon l'une quelconque des revendications 2 à 13, dans lequel ledit canal de commande est utilisé au niveau d'un système d'avertissement d'urgence lors de l'envoi d'un avertissement d'urgence à un ou plusieurs équipements UE au sein dudit réseau CPN.

15. Procédé selon l'une quelconque des revendications 2 à 14, dans lequel ledit canal de commande est utilisé en vue de mettre en oeuvre une commande transversale de traduction d'adresse réseau, NAT, dans le cadre d'une demande de liaisons de traduction NAT ; et/ou
dans lequel ledit canal de commande est utilisé dans le cadre de procédures de commande en temps réel.
